# EUROPEAN PATENT SPECIFICATION

(11) **EP 2 256 264 B1**
(45) Date of publication and mention of the grant of the patent: **23.05.2012**
(21) Application number: 10164069.6
(22) Date of filing: 27.05.2010
(51) Int. Cl.: E04C 1/41, B28B 1/00

(54) **Method for production of block-shaped building element with insulating core**
Herstellungsverfahren von blockförmigem Bauelement mit Isolierkern
Procédé de production d'un élément de construction en forme de bloc avec un noyau isolant

(30) Priority: 29.05.2009 DK 200900675
(43) Date of publication of application: 01.12.2010
(73) Proprietor: RC Betonvarer A/S, 8840 Rødkærsbro (DK)
(72) Inventor: Warming, Klaus, 8840 Rødkærsbro (DK); Warming, Per, 8850 Bjerringbro (DK)
(74) Representative: Gregersen, Niels Henrik

(56) References cited:
- EP-A2- 2 060 374
- DE-A1- 2 605 779
- DE-A1- 10 160 214
- DE-A1- 10 163 994
- DE-U1- 20 305 532
- US-A- 3 653 170

## Description

### Field of the Invention

The present invention concerns a method for production of a block-shaped building block with insulating core and of the kind indicated in the preamble of claim 1.

### Background of the Invention

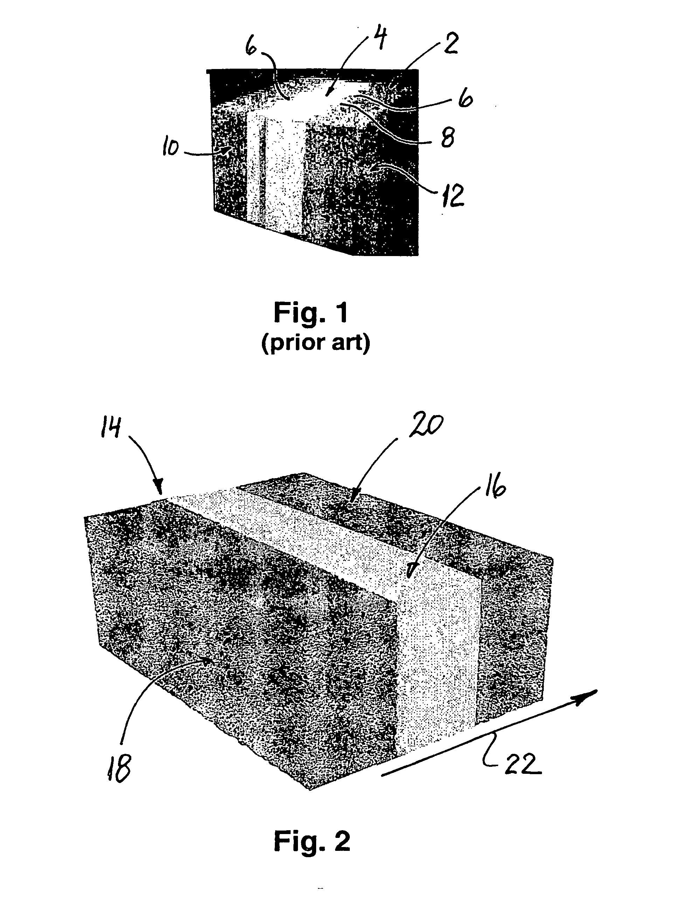

Building blocks of the actual kind are known in many embodiments, e.g. as straight building blocks (Fig. 1) and angular building blocks having in common that the central insulating core is provided with projections at opposing sides, e.g. with a cross-sectional shape as a dovetail.

The building blocks are made in a block casting machine where the central insulating core by means of the projections is cast between an outer and an inner block part, both consisting of a mixture of light clinkers and cement.

DE 101 63 994 A1 discloses a method for producing a heat insulating wall block with a load-carrying inner shell, a heat insulating shell and a protective outer shell comprises joining pre produced shells to one another. The shells are joined by producing at least one cut out running through all three shells, introducing a tie rod into each cut out and then joining the tie rods to the shells by means of a casting compound capable of taking up tensile loads.

### Object of the Invention

On this background, the purpose of the invention is to indicate a new and improved method for production of a building block of the kind mentioned in the introduction, and which may entail some entirely new and extraordinary advantages.

### Description of the Invention

The method according to the invention is characterised in that a block part in the row is pushed forward with spacing in front of the next block part, that a block-shaped core of insulating material is pushed laterally in between the block parts, that during the lateral insertion between the block parts, forward and rearward facing sides of the block-shaped core are applied the adhesive, and that already formed building blocks disposed in front are successively conveyed on a friction surface such that the frictional resistance of the building blocks is used for holding newly glued building blocks compressed while the adhesive sets.

In a simple manner it is hereby possible to produce building blocks of the current type, that is with a central core of insulating material and with cast block parts at each their side of the core, without - due to the current casting technique - requiring that respective block parts are made of identical casting mixtures.

In other words, the production of building blocks may imply a significant flexibility as the building block can be made of short or relatively long block parts (side members) with desired width and height.

The building blocks used by the method according to the invention are suitably designed such that the core consists of expanded polystyrene (ESP) or a corresponding insulating material (PUR) (PIR), as the block parts are cast from a mixture of light clinkers, such as Leca^{®} nuts, and cement.

As something extraordinary, the building block used by the method according to the invention may be designed such that the block parts have mutually different density. An outer block part, by way of example an outer side of a foundation, may hereby be made with greater density.

Alternatively, the building block used by the method according to the invention may advantageously be designed such that one or both of the blocks are cast from cellular or air-entrained concrete. For example, a building block according to the invention may be designed with an external block part cast from a mixture of light clinkers, such as Leca^{®} nuts, and cement.

The method according to the invention constitutes a technically cheap method where arrangement of more complicated holding systems for keeping respective block parts and cores compressed during the hardening of the adhesive becomes superfluous.

In case of working with block parts with different densities, it may be advantageous that the cast block parts are conveyed on two mutually parallel conveyors, that the block part pushed forward with spacing in front of the succeeding block part is pushed farther forward by a first conveyor, preferably with double spacing, that a block part from the second conveyor is pushed laterally into the gap in the first-mentioned row, preferably at the same time as the core is inserted laterally from the opposite side while simultaneously applying the adhesive on forward and rearward facing sides.

Preferably, the following method according to the invention is applied wherein during insertion of the core into the gap between the block parts; the hotmelt glue is applied in one or more horizontal strips on forward and rearward facing sides of the core.

### Description of the Drawing

The invention is explained more closely in the following with reference to the drawing, on which:
- Fig. 1: shows a perspective view of a prior art building block of the same type as the building block according to the invention;
- Fig. 2: shows a perspective view of an embodiment of building block according to the invention;
- Fig. 3: shows a plan view of a part of a production plant for use in i.a. making building blocks according to the invention; and
- Fig. 4: shows a perspective view of an embodiment of a production plant for making building blocks according to the invention.

### Detailed Description of Embodiments of the Invention

The prior art building block 2 shown in Fig. 1 consists of a central core 4 consisting of expanded polystyrene which at two sides 6 is formed with projections 8, and of two block parts 10, 12 which by a casting process has been connected with a core 4 by engaging the projections 8. The block parts 10, 12 of the building block 2 are made of a mix of Leca nuts and cement in a way known per se.

A building block 14 according to the invention has, as shown in Fig. 2, a central core 16 consisting of expanded polystyrene (EPS) and of two uniform block parts 18, 20 made by casting a mix of Leca nuts and cement.

The core 16 is made in a way known per se to wanted dimensions (height x width x length) from a larger block piece by means of electrically heated cutter wires. The core 16 has straight mutually parallel sides which by means of a suitable adhesive are connected to respective block parts 18 and 20 which also have straight mutually parallel sides.

As a consequence, a building block 14 according to the invention can be made of block parts 18, 20, each having mutually different density varying from 450-1200 kg/m³, that is which may consist of very different materials, including e.g. cellular or air-entrained concrete. The block parts 18 and 20 are generally made to wanted dimensions (height x width x length) with mutually straight parallel sides of a mixture of light clinkers and cement. Light clinkers may be Lea^{®} or Liapor^{®} nuts or a corresponding product.

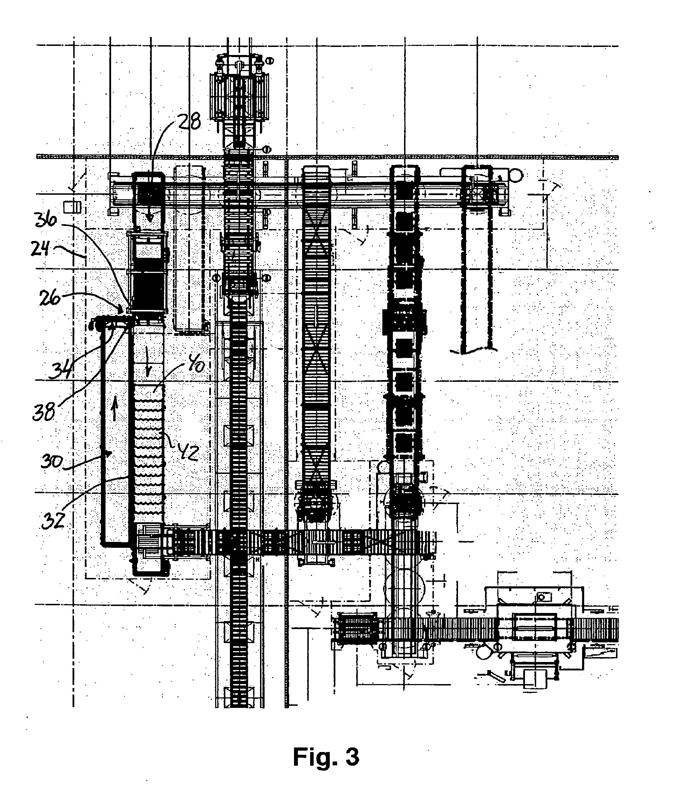

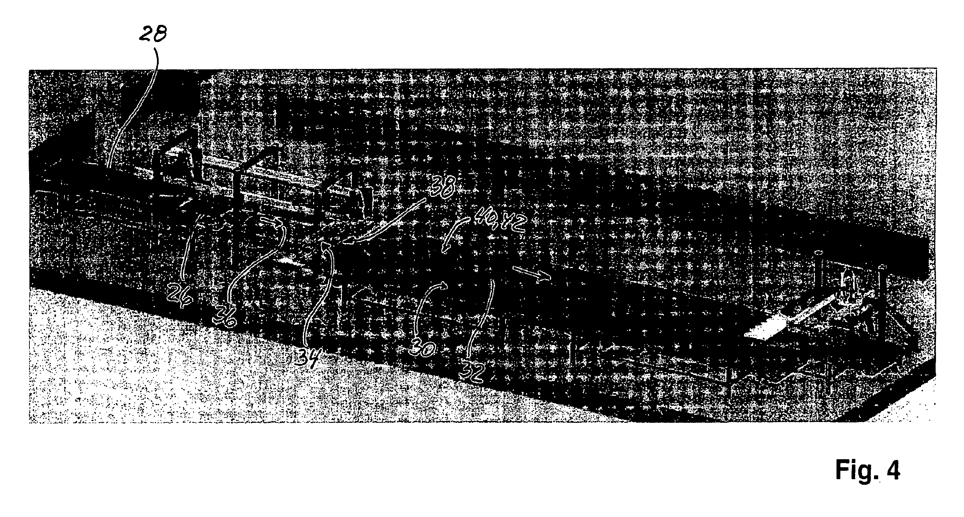

The building block 14 is made e.g. in a plant, cf. Figs. 3 and 4, with a conveying direction marked by an arrow 22 (Fig. 2). At the left of Fig. 3, a production line 26 is shown within a broken frame 24 where block parts 18, 20 are conveyed on a conveyor 28 in a successive dense row while block-shaped cores 16 are conveyed, preferably manually, via conveying face 30 with a lateral support 32 towards a feeding mechanism 34 which is adapted for pushing cores 16 one by one laterally in on the conveyor 28.

A special mechanism 36 including a lifting device which includes narrow lifter profiles that may be elevated between support lamellae of the conveyor provide for stepwise advancing of a present front block part 20, driven by a crank, for producing an interspace to a rearwardly positioned block part 18 such that by means of the feeding mechanism 34 it becomes possible to individually displace a core 18 laterally into the gap between the block parts 18 and 20.

At position 38, a system of nozzles are provided for applying horizontal strips or points of hotmelt or another type of glue which during lateral insertion of the core 16 is applied on both forward and rearward facing sides of the core 16.

The rearmost building block 18 of the newly bonded building block is pushed forwards by means of a pushing mechanism such that an unbroken line of glued building blocks 14 are advanced on a friction lining 40 consisting of carbide sheets 42 placed upon the conveyor 28.

The row of already glued building blocks 14 hereby replace current clamping means for holding respective block parts 18, 20 pressed together while the glue sets, as the friction forces between the line of building blocks 14 and the friction lining 40 according to the inventive method are utilised for keeping the block parts 18, 20 of the building blocks compressed while the glue sets.

The used hotmelt glue is by way of example of the type designation Istaweld H225E with a viscosity of 4800 mPas at 180° C, softening point at 100° C and a very long bonding time (open time) due to the self-adhering nature of the glue.

Finally, it is to be emphasised that the building block according to the invention with regard to insulating core (ESP, PUR, PIR) and different block parts or side members of materials with variable density and varying height, width and thickness constitutes a very flexible product.

Used abbreviations (insulating core):
EPS = expanded polystyrene
PUR = polyurethane (foam)
PIR = polyisocyanurate

## Claims

1. A method for production of building block (14), said block (14), including a first block part (18) and a second block part (20), the block parts (18,20) having straight mutually parallel sides and being disposed at each side of a core (16) consisting of an insulating material wherein the core (16) has a shape as a block with straight mutually parallel sides and the block parts (18,20) are fastened to opposing sides of the core (16) by means of an adhesive, wherein a dense row of cast block parts are conveyed in succession on a conveyor, wherein a block part in the row is pushed forward with spacing in front of the next block part, **characterised in that** a block-shaped core of insulating material is pushed laterally in between the block parts, that during the lateral insertion between the block parts, forward and rearward facing sides of the block-shaped core are applied the adhesive, and that already formed building blocks disposed in front are successively conveyed on a friction surface such that the frictional resistance of the building blocks is used for holding newly glued building blocks compressed while the adhesive sets.

2. Method according to claim 1, **characterised in that** the cast block parts are conveyed on two mutually parallel conveyors, that a block part pushed forward with spacing in front of the succeeding block part is pushed farther forward by a first conveyor, preferably with double spacing, that a block part from the second conveyor is pushed laterally into the gap in the first-mentioned row, preferably at the same time as the core is inserted laterally from the opposite side while simultaneously applying the adhesive on forward and rearward facing sides.

3. Method according to claim 1, **characterised in that** the adhesive is a hotmelt glue and that the hotmelt glue during insertion of the core into the gap between the block parts is applied in one or more horizontal strips on forward and rearward facing sides of the core.

## Patentansprüche

1. Verfahren zum Herstellen eines Bausteins (14), wobei der Baustein (14) einen ersten Blockabschnitt (18) und einen zweiten Blockabschnitt (20) umfasst, und die Blockabschnitte (18, 20) gerade und gegenseitig parallellen Seiten aufweisen und auf beiden Seiten eines aus einem Isoliermaterial bestehenden Kerns (16) angeordnet sind, wobei der Kern (16) blockförmig ist und gerade, gegenseitig parallelen Seiten aufweist, und die Blockabschnitte (18, 20) durch ein Klebemittel zu den gegenüberliegenden Seiten des Kerns (16) befestigt sind, wobei eine dichte Reihe von gegossenen Blockabschnitten hintereinander auf einer Fördervorrichtung gefördert wird, wobei ein Blockabschnitt in der Reihe mit Abstand vor dem folgenden Blockabschnitt vorgeschoben wird, **dadurch gekennzeichnet, dass** ein blockförmiger Kern aus Isoliermaterial zwischen die Blockabschnitte seitlich eingeschoben wird, dass während des seitlichen Einschiebens zwischen die Blockabschnitte die nach vorne und nach hinten gerichteten Flächen des blockförmigen Kerns mit Klebemittel bestrichen werden, und dass schon fertiggeformte und vorne befindliche Bausteine nacheinander auf einer Reibungsfläche gefördert werden, damit der Reibungswiderstand der Bausteine während des Abbindens des Klebemittels für das Zusammenpressen von neulich verklebten Bausteine genutzt wird.

2. Verfahren nach Anspruch 1, **dadurch gekennzeichnet, dass** die gegossenen Blockabschnitte auf zwei gegenseitig parallelen Fördervorrichtungen gefördert werden, dass ein Blockabschnitt, der mit Abstand vor dem nachfolgenden Blockabschnitt vorgeschoben wird, durch eine erste Fördervorrichtung weiter vorgeschoben wird, vorzugsweise mit Doppelabstand, dass ein Blockabschnitt von der zweiten Fördervorrichtung in die Öffnung in der erstgenannten Reihe seitlich eingeschoben wird, vorzugsweise gleichzeitig mit dem seitlichen Einsetzen des Kerns von der gegenüberliegenden Seite unter gleichzeitigem Auftragen von Klebemittel an die nach vorne und nach hinten gerichteten Flächen.

3. Verfahren nach Anspruch 1, **dadurch gekennzeichnet, dass** das Klebemittel ein Heißschmelzklebstoff ist, und dass der Heißschmelzklebstoff beim Einführen des Kerns in die Öffnung zwischen den Blockabschnitten als ein oder mehrere horizontalen Streifen an die nach vorne und nach hinten gerichteten Flächen des Kerns aufgetragen wird.

## Revendications

1. Procédé de production de bloc de construction (14), ledit bloc (14) comprenant une première partie de bloc (18) et une seconde partie de bloc (20), les parties de bloc (18, 20) ayant des côtés droits mutuellement parallèles et étant disposées de chaque côté d'un noyau (16) constitué d'une matière isolante, où le noyau (16) présente la forme d'un bloc avec des côtés droits mutuellement parallèles et les parties de bloc (18, 20) sont fixées à des côtés opposés du noyau (16) au moyen d'un adhésif, où une rangée serrée de parties de bloc coulées est transportée successivement sur un convoyeur, où une partie de bloc dans la rangée est poussée vers l'avant avec un espacement à l'avant de la partie de bloc suivant, **caractérisé en ce qu'**un noyau en forme de bloc de matière isolante est poussé latéralement entre les parties de bloc, que lors de l'insertion latérale entre les parties de bloc, l'adhésif est appliqué vers l'avant et vers l'arrière des côtés opposés du noyau en forme de bloc, et que des blocs de construction déjà formés disposés en avant sont successivement transportés sur une surface de frottement de telle sorte que la résistance de frottement des blocs de construction est utilisée pour maintenir les blocs de construction nouvellement collées pendant que l'adhésif durcit.

2. Procédé selon la revendication 1, **caractérisé en ce que** les parties de bloc coulées sont transportées sur deux convoyeurs mutuellement parallèles, qu'une partie de bloc poussée vers l'avant avec un espacement à l'avant de la partie de bloc suivante est poussée plus loin vers l'avant par un premier convoyeur, de préférence avec un espacement double, qu'une partie de bloc du deuxième convoyeur est poussée latéralement dans l'espace dans la première nommée rangée, de préférence en même temps que le noyau est inséré latéralement depuis le côté opposé tout en appliquant simultanément l'adhésif sur les côtés faisant face vers l'avant et vers l'arrière.

3. Procédé selon la revendication 1, **caractérisé en ce que** l'adhésif est une colle thermofusible et que la colle thermofusible pendant l'insertion du noyau dans l'espace entre les parties de bloc est appliquée dans une ou plusieurs bandes horizontales sur les côtés faisant face vers l'avant et vers l'arrière de la partie centrale.
